# FASCICULE DE BREVET EUROPEEN

(11) **EP 3 084 112 B1**
(45) Date de publication et mention de la délivrance du brevet: **22.07.2020**
(21) Numéro de dépôt: 14831004.8
(22) Date de dépôt: 22.12.2014
(51) Int. Cl.: E21B 17/10, B23K 9/04, B23K 31/02

(54) **ÉLÉMENT DE GARNITURE DE FORAGE DOTÉ D'UNE COUCHE DE RECHARGEMENT AMÉLIORÉE**
BOHRSTRANGELEMENT MIT VERBESSERTER NACHFÜLLSCHICHT
DRILL STRING ELEMENT HAVING AN IMPROVED REFILL LAYER

(30) Priorité: 20.12.2013 FR 1363310
(43) Date de publication de la demande: 26.10.2016
(73) Titulaire: Tuboscope Vetco (France) SAS, 59145 Berlaimont (FR)
(72) Inventeur: DIDRY, Thomas, F-59777 Lille (FR)
(74) Mandataire: Rankin, Douglas
(86) Numéro de dépôt international: PCT/FR2014/053516
(87) Numéro de publication internationale: WO 2015/092340

(56) Documents cités:
- WO-A1-94/08747
- WO-A1-02/058927
- GB-A- 2 125 466
- US-A- 4 431 902
- US-A1- 2013 118 728
- US-A1- 2013 149 552
- US-A1- 2013 266 820
- Fronius: "COLD METAL TRANSFER", Techniques de soudage, 29 September 2011 (2011-09-29), pages 1-16, XP055487779, Retrieved from the Internet: URL:http://www3.fronius.com/cps/rde/xbcr/S ID-981BA45A-15CD1EF2/fronius_france/CMT_21 1_www_264620_snapshot.pdf [retrieved on 2018-06-26]

## Description

L'invention concerne un élément de garniture de forage. Elle vise également un procédé de rechargement d'un tel élément.

Des éléments de ce type sont utilisés, en particulier dans le domaine du forage pétrolier, pour former une garniture de forage qui s'étend de la surface d'un puits au fond de celui-ci.

Ces éléments comprennent en particulier les tiges forage ("drill pipes" en anglais), les tiges lourdes de forage, ("heavy weigth drill pipes" en anglais) et les masses-tiges de forage ("drill collars" en anglais). Ils sont par exemple visés par les spécifications de l'American Petroleum Institute, ou "API" dans la technique.

En service, les éléments de garniture de forage subissent des phénomènes d'abrasion du fait de frottements entre leur surface extérieure et la paroi du puits, et/ou entre cette surface et des débris de forage qui remontent le puits.

Les parties de ces éléments les plus larges sont les plus soumises au phénomène d'abrasion. À leur niveau en effet, l'écart entre l'élément de garniture et la paroi du puits se rétrécit, ce dont il résulte une réduction de la section disponible pour le passage des débris et un rapprochement de la surface extérieure de l'élément de la paroi du puits.

Pour améliorer la résistance des éléments de forage à l'abrasion, il est connu de revêtir partiellement la surface extérieure de ceux-ci d'une couche de durcissement superficielle, aussi appelée couche "hardbanding" en anglais, ou encore couche de "rechargement" en français. En pratique, ce type de revêtement est limité aux portions de l'élément qui présentent les plus grands diamètres et/ou sont les plus épaisses.

De manière générale, le rechargement consiste à déposer du matériau d'apport, dont la composition est choisie pour ses propriétés de dureté, sur une partie de la surface extérieure de l'élément. Le matériau est classiquement déposé selon un procédé dérivé du soudage à l'arc électrique :on utilise une torche de type MIG/MAG et un fil formant électrode fusible dont la composition correspond au matériau d'apport. Le rechargement se fait par bandes successives qui entourent chacune l'élément de garniture de forage, chaque bande étant réalisée en un cordon de matière déposé par oscillation de la torche selon la longueur de l'élément.

Une fois le revêtement usé, l'élément peut être retiré de la garniture de forage et un nouveau rechargement appliqué. En pratique, un rechargement est programmé périodiquement.

On a l'habitude de calculer une valeur nominale pour l'épaisseur de la couche de rechargement, plus exactement l'épaisseur de chaque bande/cordon, sur la base d'une durée minimale de tenue en service pour l'élément rechargé et d'une vitesse d'usure de la couche de rechargement. Cette vitesse d'usure est généralement évaluée sur une petite épaisseur d'une couche de rechargement de test.

Avec un matériau d'apport de composition commune, et avec une tenue en service visée d'environ 80 heures, on obtient des valeurs nominales d'épaisseur voisines de 2,4 millimètres.

Comme la tenue en service de l'élément est limitée par l'usure de la couche de rechargement, on a l'habitude d'appliquer une forte tolérance à la valeur d'épaisseur calculée. Pour une valeur nominale de 2,4 millimètres par exemple, on tolère généralement des épaisseurs comprises entre 2,4 et 4 millimètres.

Avec le temps est apparu le besoin de faire évoluer cette technique du rechargement, et en particulier d'améliorer la tenue en service de l'élément, de la couche de rechargement.

US 2011/0220348 A1, par exemple, s'intéresse à un phénomène dit de "dilution", selon lequel une partie du matériau de base de l'élément de garniture migre dans la couche de rechargement. Il en résulte une altération des propriétés de la couche de rechargement. Ce document propose d'intercaler une couche de matière particulière entre la surface extérieure de l'élément nu, la peau, et une couche de rechargement faite d'un matériau à faible coefficient de frottement.

US 4,256,518 se préoccupe de ce que l'on appelle la "zone affectée thermiquement", c'est-à-dire d'une partie de l'élément de garniture dont la structure cristallographique du matériau de base se trouve modifiée par le dépôt à haute température du matériau d'apport. Ce document prévoit en particulier un traitement thermique postérieur au dépôt de matériau d'apport et/ou l'application d'une couche intercalaire de matière particulière, entre la peau de l'élément et la couche de rechargement.

D'autres documents traitent de la dureté du revêtement et/ou de son homogénéité. Le plus souvent, ceux-ci proposent un matériau d'apport d'une composition particulière.

Sur ce sujet, US 4,243,727 par exemple propose un revêtement dont la dureté augmente avec la profondeur, de 55,2 HRC en surface à 68,4 HRC près de la peau de l'élément. Cette évolution singulière de la dureté est obtenue grâce à une composition particulière du matériau d'apport.

WO 2011/053928 A1 divulgue un revêtement dont le comportement à l'érosion et la dureté se trouvent améliorés du fait d'une composition particulière du revêtement.

US 2011/0220348 A1, déjà mentionné, prétend obtenir un revêtement de dureté comprise entre 60 HRC et 70 HRC. En réalité, les propriétés de dureté du revêtement en question résultent d'une composition particulière de la couche intercalaire et d'un procédé de dépôt par placage.

Certains cherchent à modifier la technique utilisée pour le dépôt, et plus particulièrement à mettre au point des technologies à base de plasma laser.

US 2011/0220348 propose d'utiliser des techniques dites de "thermal spraying", ou "projection thermique" en français, qui consiste à projeter le matériau d'apport sous forme de particules de poudre ou de fil sur un substrat, ou encore de "laser/electron beam", ou "soudage laser" en français, qui consiste à projeter le matériau d'apport sous la forme d'une poudre métallique sur la pièce à travers le faisceau d'un laser de puissance. Ces techniques imposent que le matériau soit apporté sous une forme particulière, notamment de poudre.

FR 2570084 enseigne de durcir les bandes de la couche de rechargement par laser sur une profondeur d'environ 1 millimètre sans chauffer la bande jusqu'au point de fusion.

US 2013266820 décrit un élément de garniture de forage comprenant au moins une couche de rechargement.

US 4431902 décrit un procédé de rechargement en métal d'apport d'une pièce métallique d'un élément de garniture de forage.

Le document XP055487779, extrait de l'internet, intitulé "COLD METAL TRANSFER" et publié par Fronius en date du 29 septembre 2011, décrit des techniques de soudage.

De là, la Demanderesse a fait le constat suivant :la totalité, ou presque, des améliorations que l'on propose d'apporter à la technique du rechargement, du moins celles qui visent à améliorer la tenue en service de celui-ci et/ou des éléments rechargés, résultent ou imposent un matériau d'apport particulier, présentant une composition et/ou une forme spécifique.

Or, en pratique, l'usager a très peu de liberté quant au choix de la composition du matériau d'apport. D'abord, il existe dans le domaine du forage une norme sur la composition du matériau d'apport et qui constitue un cadre. Ensuite, la composition exacte d'un fil électrode, dans la mesure de la liberté laissée par la norme, relève généralement du secret de fabrication. Finalement, l'usager a l'habitude de se procurer du fil électrode auprès d'un même fournisseur, ce qui lui assure, dans une certaine mesure, des performances constantes et conformes à ses essais. Dit autrement, l'usager ne teste pas une composition de matériau d'apport mais bien le fil de tel ou tel fabricant. La Demanderesse s'est donc fixé comme objectif d'améliorer la technique du rechargement indépendamment de la composition du matériau d'apport.

Un autre objectif de l'invention est d'améliorer les performances de l'élément de garniture, ou de la couche de rechargement elle-même, tout en utilisant les fils électrode classiques, tels qu'ils sont par exemple commercialisés par les sociétés ARNCO ou Tuboscope.

On propose d'abord un élément de garniture de forage selon la revendication 13.

En particulier selon l'invention, on peut proposer un élément de garniture de forage du type comprenant au moins une couche de rechargement, dans lequel la couche de rechargement comprend un ou plusieurs cordons de métal d'apport présentant chacun une largeur comprise entre 1 et 5 millimètres et déposés de manière adjacente pour former une couche sensiblement continue sur une zone de l'élément, tel qu'une dureté mesurée en différents points d'une épaisseur radiale locale donnée de la couche varie de moins de 10 HRC dans ladite épaisseur radiale locale, en particulier y compris lorsque les points de mesure sont distants de plus de 0,5 mm, et mieux de plus de 1 mm. Avantageusement, pour plus de 95 %, mieux l'intégralité, des épaisseurs radiales de la couche de rechargement, on observe pour chacune de ces épaisseurs radiales des variations maximales de dureté entre la périphérie externe et le fond de la couche de rechargement des variations de dureté inférieure à 10 HRC.

Un élément de ce type présente de nombreux avantages sur lesquels on reviendra plus avant. Surtout, ces avantages sont pratiquement indépendants de la composition du matériau d'apport. Ils peuvent être obtenus avec des fils électrodes classiques.

On propose également un procédé de rechargement en métal d'apport selon la revendication 1.

Le procédé proposé permet d'abord d'obtenir un élément de garniture tel que proposé plus haut. Sur ce point, le terme de "rechargement" est employé ici dans le sens qui lui est généralement attribué dans la technique, qui correspond au dépôt d'une couche de matériau d'apport, ou couche de rechargement, que cette couche soit déposée sur l'élément nu ("premier" rechargement), ou en remplacement d'une couche de rechargement préalable.

Le procédé en question présente en outre de nombreux avantages sur lesquels on reviendra plus loin.

D'autres caractéristiques et avantages de l'invention apparaîtront à la lecture de la description détaillée ci-après, et des dessins sur lesquels :
- la figure 1 est une vue en coupe longitudinale partielle d'un élément de garniture selon l'art antérieur ;
- la figure 2 montre un autre élément de garniture selon l'art antérieur ;
- la figure 3 montre une couche de rechargement selon l'art antérieur ;
- les figures 4 à 6 montrent schématiquement une couche de rechargement selon l'art antérieur ;
- la figure 7 montre une macrographie d'une couche de rechargement selon l'art antérieur ;
- la figure 8 est une vue en coupe longitudinale partielle d'un autre élément de garniture selon l'art antérieur ;
- la figure 9 est une vue en coupe longitudinale partielle d'un élément de garniture selon l'invention ;
- la figure 10 montre une macrographie d'une couche de rechargement selon l'invention ;
- la figure 11 montre une couche de rechargement selon l'invention ;
- la figure 12 est une vue en coupe longitudinale partielle d'un autre élément de garniture selon l'invention ;
- la figure 13 est une vue en coupe longitudinale partielle d'un autre élément de garniture selon l'invention ;
- les figures 14 à 17 illustrent un dépôt de matériau d'apport selon l'invention ;
- la figure 18 illustre une installation pour recharger un élément de garniture de forage selon l'invention ;
- la figure 19 montre un graphique illustrant les variations de dureté dans l'épaisseur d'une couche de rechargement selon l'invention ;
- la figure 20 montre un raccord selon un aspect de l'invention ;
- la figure 21 montre un manchon en tant qu'élément de garniture de forage selon un autre aspect encore de l'invention

Les dessins annexés pourront non seulement servir à compléter l'invention, mais aussi contribuer à sa définition, le cas échéant.

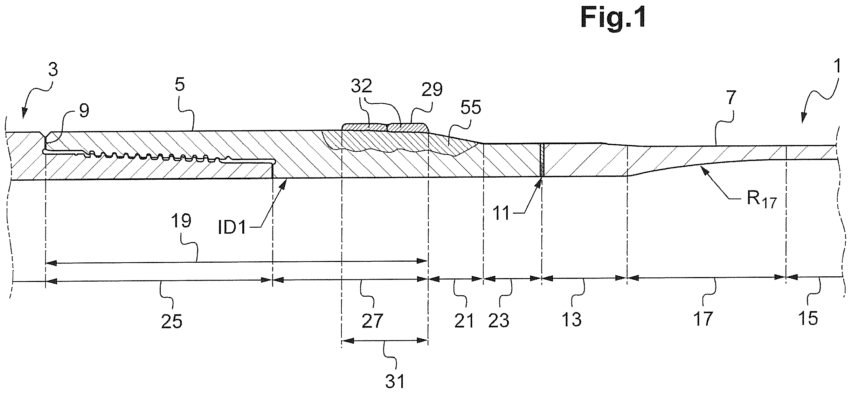

La figure 1 montre une portion d'extrémité d'une tige de forage 1 en tant qu'élément de garniture de forage. La tige 1 présente une allure générale de cylindre droit. La portion d'extrémité de la tige 1 est vissée avec une portion d'extrémité d'une tige de forage adjacente 3 dans la garniture de forage.

La portion d'extrémité de la figure 1 comprend une partie formant raccord 5, aussi appelée "tool joint" dans la technique, et une portion terminale d'une partie médiane de la tige 1 formant un corps de tige 7. La tige 1 comprend en outre une seconde partie formant raccord, non représentée, à l'extrémité du corps de tige 7 opposée au raccord 5. Le raccord 5 est assemblé au corps de tige 7 par une soudure 11. Généralement, la soudure 11 résulte d'un soudage par friction.

Le raccord 5 présente une extrémité libre 9, qui correspond à une extrémité libre de la tige 1. À une extrémité opposée à son extrémité libre 9, le raccord 5 est assemblé au corps de tige 7.

La portion terminale du corps de tige 7 comprend une portion de jonction 13, proche du raccord 5, une portion médiane 15, une portion intermédiaire 17 reliant la portion de jonction 13 à la portion médiane 15.

La portion de jonction 13 présente une épaisseur e13, un diamètre extérieur OD13 et un diamètre intérieur ID13 à peu près constants sur sa longueur. La portion médiane 15 présente une épaisseur e15, un diamètre extérieur OD15 et un diamètre intérieur ID15 à peu près constants sur sa longueur. Le diamètre extérieur OD15 de la portion médiane 15 est voisin du diamètre extérieur OD13 de la portion de jonction 13, tandis que le diamètre intérieur ID15 de la portion médiane 15 est sensiblement supérieur au diamètre intérieur ID13 de la portion de jonction 13. Il en résulte que l'épaisseur e15 de la portion médiane 15 est sensiblement inférieure à l'épaisseur e13 de la portion de jonction 13.

La portion intermédiaire 17 présente un diamètre extérieur OD17 à peu près constant sur sa longueur et voisin du diamètre extérieur OD13 de la portion de jonction 13, tandis que son diamètre intérieur ID17 augmente d'une valeur proche du diamètre intérieur ID13 de la portion de jonction 13 à une valeur voisine du diamètre intérieur ID15 de la portion médiane, de son extrémité proche de la portion de jonction 13 à son extrémité proche de la portion médiane 15, selon une courbure de rayon R17. Il en résulte que l'épaisseur e17 de la portion intermédiaire varie inversement à son diamètre intérieur ID17 sur sa longueur.

Le raccord 5 présente une portion principale 19 adjacente à l'extrémité libre 9,une portion de jonction 23 proche de la soudure 11 et une portion intermédiaire 21 reliant la portion principale 19 à la portion de jonction 23.La portion principale 19 se compose d'une section intérieurement filetée 25 proche de l'extrémité libre 9 et d'une portion massive 27 proche de la portion intermédiaire 21.

La portion principale 19 présente un diamètre extérieur OD19 à peu près constant sur sa longueur. La portion de jonction 23 présente un diamètre extérieur OD23 à peu près constant sur sa longueur, sensiblement inférieur au diamètre extérieur OD19 de la portion principale 19 et voisin du diamètre extérieur OD13 de la portion de jonction 13, et un diamètre intérieur ID23 à peu près constant sur sa longueur et voisin du diamètre intérieur ID13 de la portion de jonction 13.

La portion massive 27 présente un diamètre intérieur ID27 à peu près constant sur sa longueur et voisin du diamètre intérieur ID23 de la portion de jonction 23. La portion intermédiaire 21 présente un diamètre extérieur OD21 qui décroît linéairement de son extrémité proche de la portion principale 19 à son extrémité proche de la portion de jonction 23, d'une valeur voisine du diamètre extérieur OD19 de la portion principale à une valeur voisine du diamètre extérieur OD23 de la portion de jonction 23. La portion intermédiaire 21 présente ainsi une surface extérieure d'allure tronconique. La portion intermédiaire 21 présente un diamètre intérieur ID21 à peu près constant sur sa longueur et d'une valeur voisine au diamètre intérieur ID19 de la portion principale.

De manière connue, la tige 1 présente un revêtement superficiel de durcissement, aussi appelé couche de rechargement 29 dans la technique, qui s'étend continument sur une zone 31 du raccord 5 correspondant à un segment longitudinal de ce raccord 5.La zone rechargée 31 s'étend sur la surface extérieure de la tige 1 nue, que l'on appelle aussi la peau du milieu environ de la partie massive 27 environ, et elle se termine à proximité de la portion intermédiaire 21. Dit autrement, la zone intermédiaire 21 est dépourvue de couche de rechargement. Typiquement, la zone rechargée 31 présente une étendue suivant la direction longitudinale de la tige 1 comprise entre 70 et 100 millimètres.

La couche de rechargement 29 de la figure 1 est agencée de manière connue en soi. Elle comprend plusieurs bandes 32 d'un matériau d'apport, ici au nombre de deux, de forme annulaire, déposées de manière adjacente les unes aux autres de façon à couvrir de manière continue la zone rechargée 31. Chaque bande 32 présente une largeur comprise entre 15 et 30 millimètres, typiquement voisine de 25 millimètres. L'épaisseur de chaque bande 32, c'est-à-dire la distance qui sépare la peau de la tige 1 de la surface de la bande 32 est comprise entre 2,4 et 4,5 millimètres, avec une tolérance par rapport à une valeur nominale d'épaisseur comprise entre 0,5 et 1 millimètre. Par exemple, l'épaisseur réelle de chaque couche 32 est comprise entre 2,4 et 4 millimètres pour une valeur nominale de 2,4 millimètres.

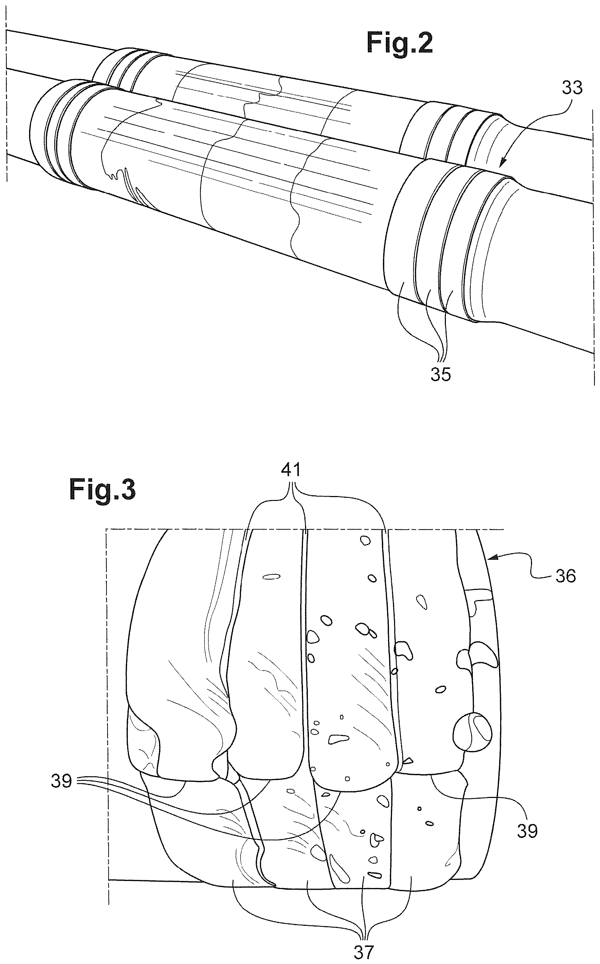

La figure 2 montre un autre exemple d'une tige de forage dotée d'une couche de rechargement 33 qui couvre une zone analogue à zone rechargée 31 de la figure 1. La couche de rechargement 33 est analogue à la couche 29 de la figure 1 à l'exception qu'elle comporte trois bandes de matière 35 mutuellement adjacentes au lieu de deux.

La figure 3 montre un autre exemple encore d'une couche de rechargement 36 agencée de manière analogue à la couche 29 de la figure 1, à l'exception qu'elle comporte quatre bandes de matière 37 mutuellement adjacentes au lieu de deux.

Chaque bande 37 présente une première zone de recouvrement 39 sur elle-même. Autrement dit, chaque bande 37 s'étend angulairement sur plus de 360°, typiquement sur 365 à 370° pour garantir la continuité de matière sur la zone rechargée.

Deux bandes 37 mutuellement adjacentes se chevauchent à chaque fois en une seconde zone de recouvrement 41. Chaque seconde zone de recouvrement 41 forme une surépaisseur de matériau d'apport particulièrement dure.

En particulier, la dureté en surface de chaque seconde zone de recouvrement 41 est sensiblement supérieure à la dureté des bandes 37, en particulier en surface de celles-ci. La dureté des bandes 37 dépend en principe de la composition du métal d'apport utilisé. À une composition particulière correspond généralement une dureté nominale. Par exemple, cette valeur nominale de dureté peut être indiquée en relation avec une référence de fil à électrode. Cette dureté nominale, liée à la composition du métal d'apport, correspond à peu près à la valeur maximale de dureté dans la couche de rechargement.

En pratique, la dureté dans la couche de rechargement 36 varie très largement par rapport à la valeur nominale, non seulement dans l'épaisseur de chaque bande 37, mais aussi dans sa largeur, ainsi que d'une bande 37 à une autre. En d'autres termes, la dureté dans la couche de rechargement 36 est très hétérogène. En outre, si la dureté tend généralement à diminuer de la surface de la couche à l'interface avec la tige 1, elle évolue cependant de manière très irrégulière dans la direction longitudinale de la tige 1.

Typiquement, avec un fil électrode présentant une dureté nominale de 65 HRC environ, on peut observer dans la couche de rechargement 36 des valeurs de dureté comprises entre 35, notamment à l'interface avec la peau, et 65 HRC, en particulier à la surface de la couche 36.

Ce qui vient d'être dit en relation avec la figure 3 est valable pour les couches de rechargement des figures 1 à 3 également, et plus généralement pour les couches de rechargement classiques.

Dans l'agencement classique des couches de rechargement, tel que montré sur les figures 1 à 3 notamment, chaque bande de matière peut être réalisée à l'aide d'une torche de type MIG/MAG, animée d'un mouvement combiné d'oscillation à vitesse et amplitude constantes et de rotation autour de l'axe de la surface à recharger. La rotation est réalisée sur 365 à 370° après quoi la torche est décalée selon la direction longitudinale de la tige pour réaliser de la même manière une bande de matière adjacente. Généralement, un recouvrement avec la bande précédente est prévu. Ce recouvrement peut être réalisé en décalant la torche sur quelques oscillations, trois par exemple.

Le plus souvent, la couche de rechargement est réalisée en une passe unique, c'est-à-dire que l'on dépose successivement les bandes 37, chacune avec une épaisseur correspondant à l'épaisseur nominale de la couche, typiquement entre 2,4 et 4,5 millimètres.

Rarement, il peut arriver que l'on réalise la couche de rechargement en plusieurs passes successives, réalisées chacune selon le procédé esquissé plus haut. Dans ce cas, après avoir déposé une première succession de bandes sur la zone rechargée; on dépose une nouvelle bande au-dessus de chacune des bandes précédemment déposées. Chaque passe améliore le taux de dilution dans l'épaisseur de la couche.

La couche de rechargement brute est généralement meulée de manière à éliminer les projections de métal d'apport, à atténuer la surépaisseur de matière en la zone de recouvrement angulaire et à réduire les disparités entre les bandes de matière, un peu à la manière d'une rectification.

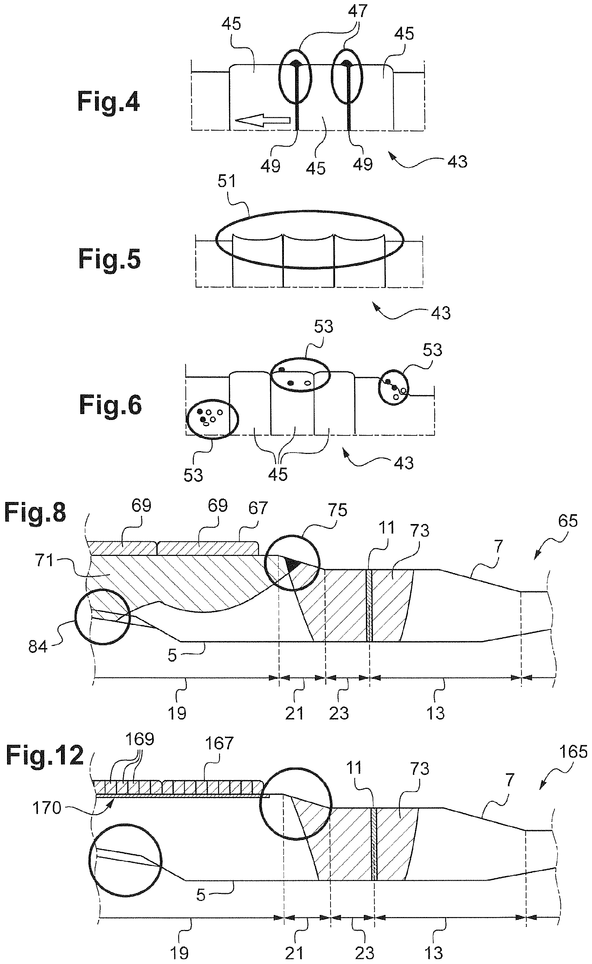

Les figures 4 à 6 illustrent des caractéristiques liées à l'agencement classique d'une couche de rechargement. Ces caractéristiques sont le plus souvent visibles à l'œil nu.

Sur la figure 4, une couche de rechargement 43 comprend trois bandes de matière 45. Entre deux bandes 45 adjacentes, on distingue à chaque fois une surépaisseur de matière 47 correspondant à une zone de recouvrement secondaire 49.

Sur la figure 5, chaque bande 45 présente un profil concave 51.

Sur la figure 6, la couche de rechargement 43 présente des projections 53 de matériau d'apport qui s'incrustent à la surface des bandes 45. Des projections 53 peuvent également s'attacher sur la peau de la tige de forage, sur une partie de cette peau proche de la couche de rechargement 43. Des projections 53 peuvent survenir en combinaison des surépaisseurs 47 et/ou du profil concave des bandes 45.

On fait de nouveau référence à la figure 1.

On y a représenté une zone affectée thermiquement 55 correspondant à la couche de rechargement 29. La zone affectée 55 résulte principalement du dépôt à haute température, généralement de l'ordre de 1500 à 2000 °C, du matériau d'apport. Dans cette zone affectée thermiquement 55, l'acier qui constitue la paroi de la tige de forage 1 présente des grains plus gros que dans le reste de la tige. Des grains plus gros fragilisent l'acier. La dureté dans la zone affectée thermiquement est largement plus élevée que la dureté du matériau de base, typiquement de l'ordre de 10 à 30%.

La zone affectée thermiquement 55 s'étend sous la zone rechargée 31, depuis la peau de la tige 1 jusqu'à une profondeur importante, typiquement jusqu'à 10 millimètres de profondeur environ. Plus généralement, la profondeur de la zone affectée thermiquement est comprise entre 2 et 5 fois l'épaisseur de la couche de rechargement.

Suivant la direction longitudinale de la tige 1, la zone affectée 55 dépasse de part et d'autre de la zone rechargée 31, en direction de l'extrémité libre 9 du raccord 5 et en direction de la soudure 11. En particulier, la zone affectée 55 s'étend sur pratiquement toute la longueur de la zone intermédiaire 21. La profondeur de la zone affectée 55 est sensiblement constante sur la longueur de cette zone.

La forme et l'étendue de la zone affectée thermiquement 55 découlent assez directement de l'agencement de la couche de rechargement 29. Autrement dit, on vient de décrire une zone thermiquement affectée caractéristique de l'agencement classique d'une couche de rechargement.

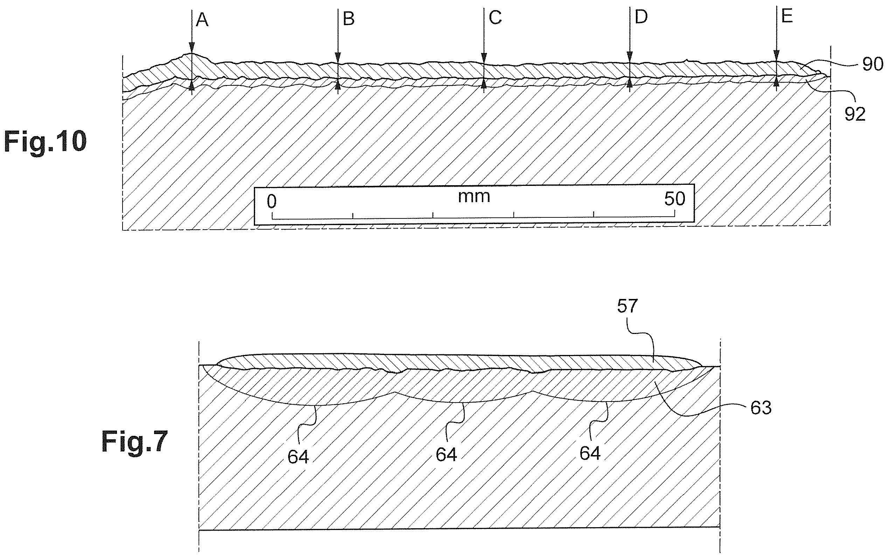

La figure 7 montre en détail l'évolution d'une zone affectée thermiquement 63 sous une couche de rechargement 57 agencée de manière classique, telle que montrée sur les figures 1 à 3.On y distingue trois sous-zones 64 mutuellement adjacentes, de forme sensiblement analogue les unes aux autres, et dont l'union correspond à la zone affectée thermiquement 63. Chaque sous-zone 64 correspond à une bande respective de la couche de rechargement 57 (non visible sur la figure 7).

Chaque sous-zone 64 présente une allure concave de concavité dirigée vers l'axe longitudinal du tube. Chaque sous-zone 64 présente une profondeur qui varie entre 5 et 12 millimètres, tandis que l'épaisseur de la couche 57 varie à peu près entre 2,5 et 3 millimètres. La profondeur maximale de chaque sous-zone 64 correspond à peu près à la moitié de l'extension longitudinale de cette sous-zone 63.

Ici, la profondeur maximale de la zone affectée thermiquement est à peu près comprise entre 1,5 et 3 fois l'épaisseur de la couche de rechargement.

Sur la figure 8, on a représenté partiellement un raccord 65 de forme analogue à celle du raccord 5 de la figure 1. Le raccord 65 présente une couche de rechargement 67 de conformation analogue aux couches de rechargement décrites plus haut. La couche 67 recouvre une zone 68 qui s'étend autour du raccord 65 sur une portion de la partie 27 et se termine à proximité de la partie proximale de la portion 21. La couche de rechargement 67 présente plusieurs bandes de matière 69 mutuellement adjacentes, dont une seule est représentée sur toute sa largeur sur la figure 8.

La zone affectée thermiquement 71 correspondant à la couche de rechargement 67 dépasse cette couche dans la direction longitudinale du raccord 5, vers la soudure 11.

Une seconde zone affectée thermiquement 73 résulte de l'opération de soudage du raccord 5 au corps de tige 7 proche de la soudure 11, s'étend de part et d'autre de celle-ci.

La zone affectée thermiquement 71 déborde sur la zone intermédiaire 21 jusqu'à créer une zone de chevauchement 75 avec la seconde zone affectée thermiquement 73.

La profondeur de cette zone 84 varie entre 4 et 6 fois de l'épaisseur des bandes 80, 82.

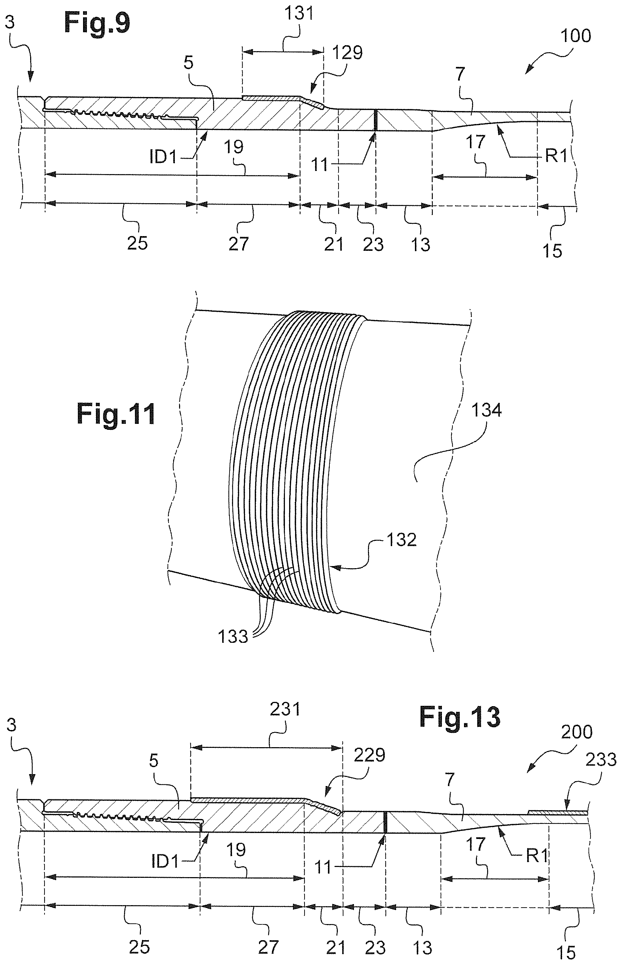

Sous certaines conditions, la zone affectée thermiquement 71 peut atteindre une zone 77 à la base des filets de la zone filetée 25, voire traverser la connexion sur toute son épaisseur. Ceci survient fréquemment dans le cas de raccords de faible diamètre, typiquement de diamètre extérieur inférieur à 5 pouces. Ceci explique pourquoi les raccords de faible diamètre sont généralement dépourvus de couche de rechargement. On fait référence à la figure 9.

Elle montre une extrémité d'une tige de forage 100 selon un aspect de l'invention. La tige 100 est de forme analogue à la tige 1 de la figure 1. Des références numériques identiques à celles de la figure 1 désignent des éléments analogues.

La tige de forage 100 présente au moins une couche de rechargement 129 couvrant une zone 131 correspondant à un segment longitudinal de la tige 100.

La couche de rechargement 129 présente une configuration, ou un agencement, particulier différent de celui des couches classiques, telles que la couche 29 par exemple. La composition du métal d'apport utilisé peut cependant être identique.

La couche de rechargement 129 comprend un ou plusieurs cordons de matière présentant chacun une largeur comprise entre 1 et 5 millimètres et déposés de manière adjacente pour former une couche de matière sensiblement continue sur la zone rechargée 131. Dans une réalisation actuellement préférée, la largeur des cordons est voisine de 2 millimètres.

Contrairement aux bandes de la couche de rechargement 29, les cordons la couche de rechargement 129 sont dépourvus de zone de recouvrement angulaire entre cordons.

Selon un aspect complémentaire de l'invention, la dureté dans l'épaisseur de la couche varie de moins de 10 HRC, de préférence de moins de 5 HRC. De préférence, la dureté évolue de manière monotone dans l'épaisseur de la couche. En particulier, elle décroît de la surface de la couche 129 à la peau de la tige 100.

En particulier, la dureté pour toute épaisseur radiale locale donnée de la couche de rechargement peut varier de moins de 10 HRC, voire mieux de moins de 8 HRC, dans chacune de ces épaisseurs radiales locales.

La Demanderesse a constaté qu'une couche de rechargement du type de la couche 129 améliore les performances de la tige 100, notamment en ce qui concerne la tenue en service. La couche de rechargement 129 s'use de manière progressive et régulière. Ainsi la tenue en service de la tige 100 peut être prévue de manière plus fiable que dans le passé. En particulier, cette tenue en service peut être estimée de manière fiable à partir d'essais réalisés uniquement en surface de cette couche. Les propriétés de la couche 129 peuvent être observées quelle que soit la composition du métal d'apport. Cela permet d'améliorer les performances de la tige 100 tout en utilisant des fils électrodes classiques. Cela peut également permettre de réduire l'épaisseur nominale de la couche de rechargement, puisque l'usure de cette couche est mieux maîtrisée. Autrement dit, il n'est pratiquement plus nécessaire de déposer du métal d'apport en excès, en tous cas en moindre quantité, par rapport à la valeur d'épaisseur calculée pour garantir que l'élément tienne la durée de service recherchée.

La figure 9 fait apparaître un aspect supplémentaire de l'invention selon lequel la zone rechargée 131 s'étend sur une partie au moins de la zone de transition 21 de la tige 100, ici adjacente à la portion principale. Du côté opposé à la zone de transition 21, la zone rechargée 131 s'étend sur une partie de la portion massive 27, ici jusqu'à environ la moitié de la longueur de cette portion. Dans le mode de réalisation présenté ici, la zone rechargée s'étend sur environ la moitié de la longueur de la zone de transition, ce qui permet déjà d'améliorer grandement la tenue en service de la tige. Cela permet en outre de protéger la tige au niveau de l'arête qui sépare cette zone de transition 21 de la partie massive 27. En variante, la zone rechargée pourrait s'étendre plus ou moins sur la zone de transition 21, en particulier entre 1 et 2 tiers de la longueur de cette dernière.

La figure 13 montre une extrémité de tige 200 en tant que variante de l'extrémité de tige 100 de la figure 9.

L'extrémité de la tige 200 comprend une couche de rechargement 229 configurée conformément à la couche 129 de la figure 9 et qui couvre une zone 231. Selon un premier aspect de ce mode de réalisation particulier, la zone rechargée 231 s'étend sur l'ensemble de la zone de transition 21. Comme les tiges du type de la tige 200 sont le plus souvent saisies et vissées au niveau de la zone de transition 21, ces tiges 200 se trouvent protégées contre l'abrasion due aux outils utilisés.

Selon un second aspect de ce mode de réalisation, complémentaire ou substitutif au premier, la zone rechargée 231 s'étend sur une partie au moins de la section intérieurement filetée 25.

Selon un troisième aspect de ce mode de réalisation, optionnel, complémentaire ou substitutif des premier et second aspects, la tige de forage 200 comprend en outre une seconde couche de rechargement 233 qui couvre une zone s'étendant sur une partie de la surface extérieure du corps de tige 15. La seconde couche de rechargement présente une configuration conforme à celle de la couche 129 de la figure 9.

La figure 11 montre un développement avantageux de l'invention dans lequel la couche de rechargement selon l'invention comprend un unique cordon de matière 132 de forme hélicoïdale et à spires 133 jointives. Le cordon de matière 132s'enroule autour de la surface extérieure 134 de la tige nue de manière à couvrir la zone rechargée. Chaque spire présente ici une largeur d'environ 1 millimètre et une épaisseur nominale de 2,8 millimètres (épaisseur moyenne voisine de 3 millimètres). Plus généralement, la largeur du cordon 131 est comprise entre 2 à 4 millimètres, tandis que son épaisseur est comprise entre 2 et 4 millimètres.

À la différence des couches de rechargement de l'état de la technique, la couche de rechargement selon l'invention est dépourvue de zone de recouvrement angulaire.

Selon un aspect complémentaire de l'invention, l'agencement particulier de la couche de rechargement est associé à une zone affectée thermiquement qui s'étend sur moins de 2 millimètres de profondeur, quelle que soit l'épaisseur de la couche de rechargement

On fait référence à la figure 10 qui montre une couche de rechargement 90 et l'étendue de la zone affectée thermiquement 92 dans une tige de forage selon l'invention pour une épaisseur de cordon. On fait conjointement référence au tableau 1 ci-dessous, lequel indique :
- Colonne I : lieu de mesure sur la figure 10, disposés sur une génératrice de la surface extérieure recouverte par couche.
- Colonne II : éloignement du lieu de mesure au lieu A (en millimètres);
- Colonne III : épaisseur de la couche de rechargement au lieu de mesure (en millimètres);
- Colonne IV : profondeur de la zone affectée thermiquement au lieu de mesure (en millimètre);
- Colonne V : rapport épaisseur/profondeur affectée thermiquement (en %).

**Tableau 1 :**

| I | II | III | IV | V |
|---|---|---|---|---|
| A | 0 | 3,88 | 1,38 | 35 |
| B | 154 | 2,00 | 1,34 | 67 |
| c | 320 | 1,92 | 1,07 | 56 |
| D | 463 | 2,00 | 0,96 | 48 |
| E | 592 | 1,96 | 0,96 | 49 |
| moyenne | | 2,35 | 1,14 | 51 |

À l'exception d'une zone de faible étendue entourant le point A, l'épaisseur du cordon est voisine de 2 millimètres. Elle varie entre 1,92 millimètre et 2 millimètres. L'épaisseur est homogène.

Au lieu A, la couche présente une épaisseur de 3,88 millimètre. Il s'agit d'une surépaisseur destinée à renforcer à la jonction entre la zone tronconique et la zone cylindrique. Cette surépaisseur est optionnelle : en pratique, la couche de rechargement peut également présenter une épaisseur d'environ deux millimètres à proximité du point A.

La zone affectée thermiquement est inférieure à 1,5 mm. La profondeur de zone affectée thermiquement est comprise entre 0,96 et 1,38 millimètre. La profondeur de zone affectée thermiquement en un lieu de mesure est pratiquement indépendante de l'épaisseur de la couche de rechargement en ce lieu.

En pratique, des valeurs d'épaisseur ou de profondeur artefacts dues à la présence d'un grain de matière dure pourraient ponctuellement modifier l'homogénéité de la couche de rechargement, et éventuellement de la zone affectée thermiquement correspondante.

La figure 12 montre une autre variante encore de l'invention, dans laquelle un raccord 165 est doté d'une couche de rechargement 167 qui recouvre une zone s'étendant sur une longueur voisine de la couche de rechargement 67 de la figure 8.La couche de rechargement 167 est agencée conformément à la couche 129 de la figure 9. En particulier, la couche 167 comprend un cordon de matière déposé selon un chemin en hélice dont les spires 169 se rejoignent.

Le raccord 165 présente une zone affectée thermiquement 170 beaucoup plus réduite que dans le cas de la figure 8 : non seulement la zone affectée thermiquement 170 s'étend beaucoup moins profondément que la zone 71 de la figure 8, mais encore elle ne dépasse pratiquement pas la couche de rechargement 167 axialement, ni en direction de la zone de transition 21, ni en direction opposée

On constate l'absence de chevauchement entre la première zone affectée thermiquement 170 et la seconde zone affectée thermiquement 73. La tenue du raccord 165 se trouve ainsi améliorée.

La figure 12 illustre également un autre aspect encore de l'invention selon lequel on prévoit un élément de garniture de forage présentant au moins un segment de faible épaisseur et doté d'une couche de rechargement qui couvre une zone s'étendant sur une partie au moins du segment de faible épaisseur et présentant la configuration particulière décrite en relation avec la figure 9. Dans un développement particulier, l'élément en question comprend un raccord fileté, ou "tool joint", du type du raccord 165 doté d'une couche de rechargement 167 qui couvre une zone d'étendant une partie au moins de la portion principale 19, cette dernière présentant une faible épaisseur. L'invention vise encore plus particulièrement des segments de très faible épaisseur, typiquement inférieure à 10 millimètres.

Par " faible diamètre", on entend un diamètre extérieur inférieur à 5 pouces environ. Par faible épaisseur, on entend une épaisseur généralement inférieure à 20 millimètres.

On décrit maintenant un procédé qui permet d'obtenir la configuration particulière d'une couche de rechargement décrite précédemment, en relation avec la couche 129 de la figure 9 notamment.

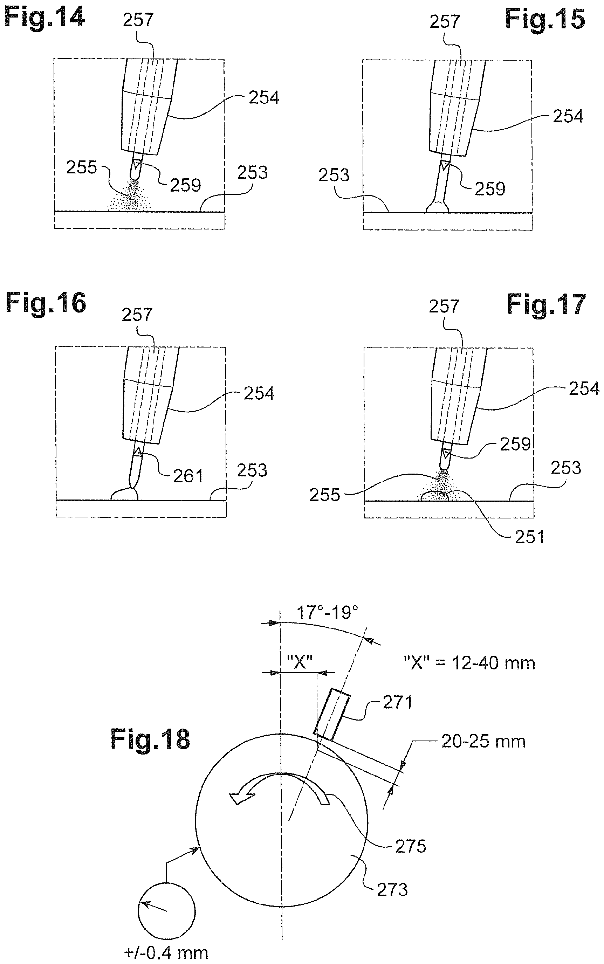

On fait d'abord référence aux figures 14 à 17 qui illustrent une étape particulière du procédé selon l'invention consistant à déposer une gouttelette 251 de métal d'apport sur une surface à recharger 253, typiquement une partie de la surface extérieure des tiges de forage 100 ou 200. L'étape utilise une torche de soudage 254.

Le dépôt en question utilise un arc électrique 255 court entre l'extrémité d'un fil électrode 257 et la surface à recharger 253. Dit autrement, la torche 253 est proche de la surface à recharger 253. Le fil électrode 257 peut être de toute composition adaptée à la création d'une couche de rechargement de type classique, par exemple du type commercialisé par les sociétés ARCNO, Castolin ou encore Tuboscope. Pendant la période d'existence de l'arc électrique 255, le fil électrode 257 est avancé par rapport à la torche 254 en direction du bain de matière. Ce mouvement d'avance est symbolisé par une flèche 259 sur la figure 14.

Sur la figure 15, lorsqu'une partie du fil électrode 257 fond dans le bain de soudure, on supprime l'arc électrique en abaissant l'intensité du courant dans le fil électrode 257.

Comme on le voit sur la figure 16, on fait reculer le fil électrode 257 par rapport la torche 254 (mouvement symbolisé par une flèche 261).L'extrémité du fil électrode 257 s'éloigne de la surface 253.Une gouttelette 251 de métal d'apport se forme sur la surface à recharger, laquelle se détache du fil électrode 257.

On augmente l'intensité du courant dans le fil électrode 257 et l'on avance le fil électrode par rapport à la torche 254, ce qui correspond à la situation de la figure 17. Entre la situation de la figure 16 et celle de la figure 17, on a décalé la torche 253 par rapport à la surface 253 de manière que l'extrémité du fil électrode 257 vise une partie de la gouttelette 251. En pratique, on cherche un recouvrement d'environ 1 millimètre entre deux gouttelettes d'environ 2 millimètres de diamètre, ou autrement dit d'environ la moitié du diamètre de la gouttelette.

Cette façon de déposer la gouttelette 251, en 3 sous-étapes dont une seule se fait avec apport d'énergie calorifique, réduit considérablement la chaleur transmise à la surface 250. C'est une façon efficace d'obtenir une zone affectée thermiquement de faible étendue. En particulier, cela permet de réaliser une couche de rechargement avec une zone affectée thermiquement qui s'étend sur moins de 2 millimètres de profondeur.

On désigne "mode soudage à froid" cette façon de faire opérer la torche de soudage 254. Ce mode est équivalent à un dépôt goutte à goutte du matériau d'apport.

On fait référence à la figure 18 qui montre une installation pour le procédé selon l'invention.

L'installation comprend une torche de soudage 271, analogue à la torche 254 des figures 14 à 17, maintenue en position par rapport à une pièce à recharger 273. L'installation intègre un système mécanique par l'intermédiaire duquel la torche est montée sur le porte-outil et qui permet d'animer cette torche de mouvements de va et vient relativement au porte-outil. Le système mécanique en question peut être basé sur le principe d'un galet entraineur motorisé.

La pièce 273 présente une forme de révolution, au moins sur la partie de cette pièce qu'il s'agit de recharger. La pièce 273 peut être une tige de forage analogue à la tige 100 de la figure 10.

La pièce 273 est mise en rotation autour de son axe, par exemple au moyen d'un mandrin rotatif. Ce mouvement de rotation est représenté par la flèche 275. La torche 271 est mue d'un mouvement d'avance selon une direction parallèle à l'axe de rotation de la pièce. De préférence le mouvement d'avance est continu. Les mouvements d'avance et de rotation sont mutuellement synchronisés. Entre autre chose, cela permet de réaliser une couche de rechargement comprenant un cordon hélicoïdal axé sur l'axe de la pièce 273. Par exemple, la vitesse de rotation est inférieure à 10 tours par minute, tandis que la vitesse de déplacement est inférieure à 15 millimètres par minute. Selon un aspect du procédé, la vitesse de rotation et la vitesse de déplacement sont synchronisées de manière que le cordon s'étende selon des spires jointives.

En particulier, cette synchronisation est telle que le dépôt d'une nouvelle spire se fasse en visant une partie de la spire précédente, plutôt que la surface extérieure de la pièce 273. Cela permet de réduire encore la chaleur transmise à la pièce, et participe à la réalisation d'une zone affectée thermiquement de faible étendue. Ces vitesses sont également adaptées en fonction de l'épaisseur de cordon souhaitée. La forme de la gouttelette et sa taille peuvent être modifiées en jouant sur un ou plusieurs des paramètres suivants: Inclinaison/Position de la torche (Influence la forme du cordon donc sa longueur), Énergie de soudage, Vitesse de rotation, Vitesse déplacement de la torche.

Ici, deux spires de matière adjacentes se chevauchent mutuellement sur une zone de largueur comprise entre 1 et 2 millimètres.

L'axe longitudinal de la torche est incliné d'un angle A par rapport au support de torche. La valeur de l'angle A est telle que l'arc est généré entre le cordon précédemment déposé plutôt qu'avec la surface de la pièce. Ceci contribue également à réduire la zone affectée thermiquement résultante. Par exemple, l'angle peut être inférieur à 40°. L'intensité du courant est comprise entre 180 et 250 ampères, la tension entre 10 et 25 volts.

En particulier, ce procédé a permis d'obtenir la couche de rechargement de la figure 10.

On vient de décrire un procédé de dépôt d'une couche de rechargement qui permet, entre autres choses, la réalisation d'une couche de rechargement comprenant un ou plusieurs cordons de métal d'apport présentant chacun une largeur comprise entre 1 et 5 millimètres et déposés de manière adjacente pour former une couche sensiblement continue sur une zone de l'élément, tandis que la dureté dans l'épaisseur de la couche varie de moins de 5 HRC sur la zone en question.

En comparaison d'autres procédés permettant de réaliser une telle couche de rechargement, le procédé selon l'invention présente les avantages suivants :
- La couche de rechargement peut être réalisée en un seul dépôt d'un ou plusieurs cordons, c'est-à-dire qu'il n'est pas nécessaire de repasser sur une partie déjà rechargée. Il n'y a aucun recouvrement angulaire.
- La couche peut être réalisée avec du fil électrode de composition classique.

Le procédé décrit a vocation à être utilisé de manière plus large, en particulier pour réaliser une couche de rechargement dont l'agencement pourrait différer de l'invention. En comparaison des procédés classiques, le procédé décrit présente les avantages suivants :
- Il est lié à une zone affectée thermiquement de faible profondeur ;
- Il ne génère pas ou peu de projections de matière du fait d'un arc électrique plus stable ; de ce fait, il rend facultative toute opération de meulage. Toutefois, une telle opération pourrait être réalisée de manière à modifier l'état de surface et le caractère abrasif de la surface.
- Il ne nécessite pas l'échauffement préalable de la pièce à recharger, ce dont il résulte d'une part des économies d'énergie et d'autre part un gain de temps du fait que la pièce rechargée n'a pas besoin d'être refroidie, ou du moins nécessite un refroidissement moins long ;

- Il améliore sensiblement le phénomène de dilution dans la couche de rechargement, même dans le cas d'un dépôt appliqué en une passe. À titre d'exemple, la Demanderesse a constaté un taux de dilution inférieur à 5% dans la couche de rechargement, ce qui ne peut être obtenu, avec les procédés classiques, que pour les zones les plus superficielles de la couche et à la condition de passes successives. Ceci est montré dans le tableau 2 suivant, qui compare la répartition entre matériau de rechargement (HB) et le matériau de la tige (BASE) pour les trois applications d'un procédé classique, à l'unique application du procédé selon l'invention.

**Tableau 2 :**

| | HB (%) | BASE (%) |
|---|---|---|
| Application 1 | 60 | 40 |
| Application 2 | 84 | 16 |
| Application 3 | 94 | 6 |
| Unique application | 95 | 5 |

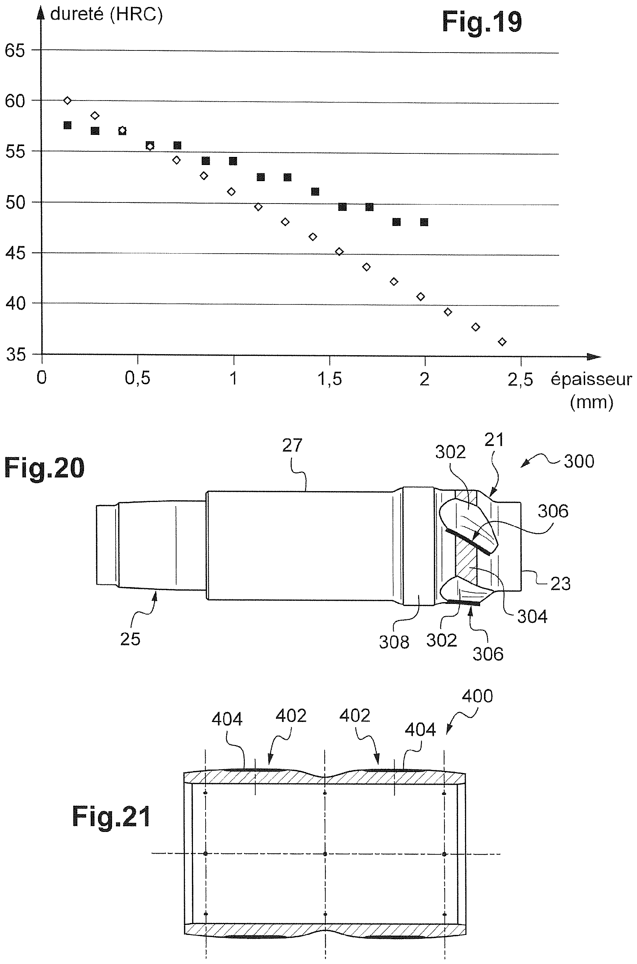

On fait maintenant référence à la figure 19.

Elle montre un graphique comparant l'évolution de la dureté (en ordonnées), exprimée en Vickers, en fonction de l'épaisseur (en abscisses) d'une couche de rechargement classique (losange) d'une part (une seule passe), et une couche de rechargement obtenue grâce au procédé selon l'invention (carrés) d'autre part (une seule passe). Dans les deux cas, on a utilisé un fil électrode identique.

Le graphique confirme que la dureté varie grandement avec l'épaisseur dans une couche classique, ici entre 60 HRC en surface et 35 HRC à l'interface avec la peau.

On constate que le procédé décrit permet d'obtenir une variation beaucoup plus faible dans l'épaisseur de la couche de rechargement: décroissance de la dureté avec la profondeur, ici d'une valeur de 57,5 HRC en surface à 48,5 HRC à l'interface avec la peau. Il permet notamment d'obtenir une variation de dureté inférieure à 5 HRC dans l'épaisseur de la couche.

La mesure dans l'épaisseur reproduite à la figure 19 représente les valeurs mesurées successivement dans la couche de rechargement selon un axe perpendiculaire à la surface extérieure de l'élément nu, perpendiculairement à ladite peau.

En particulier, la tendance observée à la Figure 19 peut s'observer pour plus de 80%, préférablement l'intégralité, de la couche de rechargement. Dans ce cas, en tout point de la surface extérieure de l'élément nu, recouvert de la couche de rechargement, on peut mesurer la dureté de la couche de rechargement selon un axe orthogonal à la peau, et les mesures le long de cet axe, pour chaque épaisseur radiale locale donnée, présentent une variation inférieure à 10 HRC.

En particulier, la variation maximale entre toutes les mesures de dureté de la couche de rechargement, ces mesures étant prises à différent niveaux le long d'un axe orthogonal à la peau, est inférieure à 10 HRC. Plus particulièrement, la variation entre deux mesures correspondant à deux points de mesure le long de cet axe orthogonal, lesdits points de mesure étant distants d'au moins 0,5 mm, mieux d'au moins 1 mm, et notamment mieux encore d'au moins 2 mm, peut être inférieure à 10 HRC. En particulier, la variation de dureté entre un point de mesure à la surface de la couche de rechargement et un point de mesure dans la couche de rechargement adjacent à la peau est inférieure à 10 HRC, les deux points de mesure étant pris le long d'un axe orthogonal à ladite peau.

Lorsque l'on effectue cinq mesures de dureté à cinq profondeurs distinctes le long d'un axe orthogonal à la peau au sein de la couche de rechargement, et que l'on répète ces cinq mesures à des emplacements espacés tous les 0,5 mm le long de l'axe longitudinal du tube, on obtient une vingtaine d'emplacements de mesures. Pour chaque épaisseur radiale locale, on obtient pour chacun de ces emplacements de mesure, une variation maximale de la dureté mesurée dans l'épaisseur radiale qui est systématiquement inférieure à 10 HRC.

Des mesures ont été réalisées selon le protocole ci-dessous dans une couche de rechargement selon l'invention, et la dispersion de ces variations est donnée dans le tableau ci-dessous. On observe en particulier que plus de 95% des variations de dureté évaluées respectivement pour chaque épaisseur radiale locale donnée est inférieur à 8 HRC. On observe également que plus de 60% des variations de dureté évaluées respectivement pour chaque épaisseur radiale locale donnée est inférieur à 6 HRC.

| Simple couche selon l'invention | |
|---|---|
| Classes de variations | Proportion |
| Fréquence des variations de dureté entre 0 et 2 HRC | 25,00 % |
| Fréquence des variations de dureté entre 2 et 4 HRC | 21,05 % |
| Fréquence des variations de dureté entre 4 et 6 HRC | 31,58 % |
| Fréquence des variations de dureté entre 6 et 8 HRC | 19,74 % |
| Fréquence des variations de dureté entre 8 et 10 HRC | 2,63 % |
| Fréquence des variations de dureté supérieure à 10 HRC | 0% |

Pour un mode de réalisation dans lequel la couche de rechargement est la somme de deux couches de rechargement selon l'invention disposées l'une au-dessus de l'autre (en deux passes), on obtient une dispersion des variations de dureté évaluée chacune pour une épaisseur radiale donnée inférieure à 8 HRC au sein de la couche de rechargement la plus externe de ces deux couches (voir tableau ci-après).

| Double couche selon l'invention | |
|---|---|
| Classes de variations | Proportion |
| Fréquence des variations de dureté entre 0 et 2 HRC | 20,00 % |
| Fréquence des variations de dureté entre 2 et 4 HRC | 40,00 % |
| Fréquence des variations de dureté entre 4 et 6 HRC | 20,00 % |
| Fréquence des variations de dureté entre 6 et 8 HRC | 20,00 % |
| Fréquence des variations de dureté entre 8 et 10 HRC | 0% |
| Fréquence des variations de dureté supérieure à 10 HRC | 0% |

On fait référence à la figure 20 qui montre un raccord fileté 300. Le raccord fileté 300, ici de type mâle, présente une zone de transition 21 séparant une partie massive 27, à laquelle se rattache une portion filetée 25, d'une portion 23 destinée à être raccordée, en particulier par soudage, à un corps de tige non représenté.

Le raccord 300 présente une configuration particulière, connue dans la technique sous le nom de "Hydroclean Max TJ", dans laquelle il présente une succession d'évidements 302 ouverts sur sa surface extérieure et angulairement répartis autour du raccord 300. Les évidements 302 sont disposés à cheval sur la zone de transition 21 et une portion adjacente de la partie massive 27.

Selon un aspect de l'invention, le raccord 300 est doté d'une couche de rechargement 304 qui s'étend sur une zone partiellement annulaire séparant les évidements 302 les uns des autres. La couche de rechargement 304 présente la configuration particulière décrite plus haut.

Selon un autre aspect encore de l'invention, qui peut être complémentaire au précédent ou le remplacer, chaque évidement 302 est en outre muni d'une couche de rechargement respective 306, qui s'étend sur une partie au moins de sa surface, ici uniquement sur une portion essentiellement radiale de cette surface.

La figure 20 montre que le raccord 300 peut en outre être doté d'une couche de rechargement supplémentaire 308 qui couvre une zone annulaire disposée à proximité des évidements 302, du côté opposé à la zone de transition 21.

On fait maintenant référence à la figure 21 qui montre un manchon 400 en tant qu'élément de garniture de forage. Le manchon 400 présente deux segments symétriques 402 correspondant chacun à une connexion de type femelle. Selon un aspect de l'invention, chaque segment 402 est muni extérieurement d'une couche de rechargement 404 qui couvre une zone annulaire s'étendant sur une partie au moins de sa longueur. Sur la figure 21, le manchon 400 présente une très faible épaisseur (généralement inférieure à 10 millimètres). En variante, le manchon 400 pourrait présenter une épaisseur supérieure, inférieure à 20 millimètres cependant.

## Revendications

1. Procédé de rechargement en métal d'apport d'une pièce métallique, dans lequel la pièce métallique est un élément de garniture de forage, et dans lequel on utilise une installation de soudage comprenant une torche de type MIG/MAG, un porte-outil sur lequel est montée la torche, et un support de pièce, le procédé comprenant les étapes suivantes :
a. placer une pièce métallique comprenant une surface périphérique à recharger au moins partiellement sur le support de pièce ;
b. amener le porte-outil avec la torche et le support de pièce en une position relative initiale où la torche vise un premier lieu de la surface périphérique ;
c. déplacer le porte-outil et le support de pièce l'un par rapport à l'autre jusqu'à une position relative finale où la torche vise un second lieu de la surface périphérique, axialement éloigné du premier lieu ;
d. actionner la torche en mode soudage à froid pendant une partie au moins du déplacement relatif du porte-outil et du support de pièce pour déposer un ou plusieurs cordons de métal d'apport de manière adjacente en formant une couche sensiblement continue sur une partie au moins de la surface périphérique allant du premier au second lieu, la torche étant actionnée en mode soudage à froid pendant une partie au moins du déplacement simultané de translation et de rotation,
dans lequel actionner la torche en mode soudage à froid comprend les opérations suivantes:
(i) utiliser un arc électrique (255) court entre l'extrémité d'un fil électrode (257) et la surface périphérique (253) et avancer le fil électrode (257) par rapport à la torche (254) en direction d'un bain de matière;
(ii). lorsqu'une partie du fil électrode (257) fond dans le bain de soudure, supprimer l'arc électrique en abaissant l'intensité du courant dans le fil électrode (257); et
(iii) faire reculer le fil électrode (257) par rapport la torche (254) pour déposer une gouttelette (251) du métal d'apport sur la surface périphérique (253), laquelle se détache du fil électrode (257).

2. Procédé selon la revendication 1, dans lequel, la surface périphérique présentant une forme générale de révolution, l'étape c. comprend les opérations suivantes :
c.1. déplacer en translation relative le porte-outil et le support de pièce de manière que le porte-outil avance vers la position relative finale ; et
c.2. déplacer en rotation relative le porte-outil et le support de pièce pendant une partie au moins de leur translation relative de manière que le porte-outil tourne en même temps autour de la surface périphérique.

3. Procédé selon la revendication 2, dans lequel l'étape d. comprend les opérations suivantes :
d.1. actionner la torche en mode soudage à froid pendant une partie au moins du déplacement simultané de translation et de rotation ;
d.2. immobiliser la torche par rapport au porte-outil au moins pendant son actionnement en mode soudage à froid.

4. Procédé selon la revendication 3, dans lequel l'opération c.2. comprend la sous-opération suivante :
c.2.1. synchroniser la rotation relative du porte-outil et du support avec leur translation relative pendant une partie au moins de cette dernière de manière que le porte-outil décrive au moins une portion d'hélice par rapport à la surface périphérique ; et
l'opération d.1 comprend la sous-opération suivante :
d.1.1. actionner la torche en mode soudage à froid sur une partie au moins de la portion d'hélice.

5. Procédé selon la revendication 3, dans lequel l'opération c.2. comprend la sous-opération suivante :
c.2.1. déplacer en rotation relative le porte-outil et le support de pièce de manière que le porte-outil effectue plusieurs révolutions autour de la surface périphérique en même temps que la translation relative du porte-outil et du support de pièce ;
l'opération d.1. comprend la sous-opération suivante :
d.1.1 actionner la torche en mode soudage à froid pendant une partie au moins de chaque révolution de manière à déposer à chaque fois un cordon de soudure respectif sur la surface périphérique ; et
l'opération d.2. comprend la sous-opération suivante :
d.2.1. maintenir la torche inclinée par rapport au porte-outil de manière telle qu'elle vise à chaque révolution le pied d'un cordon de soudure déposé lors de la révolution précédente.

6. Procédé selon la revendication 4, dans lequel la synchronisation est telle que la portion d'hélice présente des spires jointives, en partie au moins.

7. Procédé selon l'une des revendications 1 à 6, dans lequel les cordons déposés présentent chacun une largeur comprise entre 1 et 5 millimètres.

8. Procédé selon l'une des revendications 1 à 7, dans lequel la torche est immobilisée par rapport au porte-outil au moins pendant son actionnement en mode soudage à froid.

9. Procédé selon l'une des revendications 2 à 8, dans lequel, à l'opération c.1. le porte-outil et le support de pièce sont translatés l'un par rapport à l'autre à une vitesse comprise entre 0 et 30 millimètres par minute.

10. Procédé selon l'une des revendications 2 à 9, dans lequel, à l'opération c.2. le porte-outil et le support de pièce sont mis en rotation l'un par rapport à l'autre à une vitesse comprise entre 0 et 10 tours par minute.

11. Procédé selon l'une des revendications 1 à 10 comprenant en outre l'étape suivante :
e. maintenir la pièce à température ambiante au moins jusqu'à l'actionnement de la torche.

12. Procédé selon l'une des revendications 1 à 11 , dans lequel le ou les cordons déposés se chevauchent sur une partie de leur largeur comprise entre 10 et 30%.

13. Élément de garniture de forage du type comprenant au moins une couche de rechargement, **caractérisé en ce que** la couche de rechargement comprend un ou plusieurs cordons de métal d'apport présentant chacun une largeur comprise entre 1 et 5 millimètres et déposés de manière adjacente pour former une couche sensiblement continue sur une zone de l'élément, tandis que la dureté dans l'épaisseur de la couche varie de moins de 10 HRC sur ladite zone, et **en ce que** l'élément est obtenu par le procédé selon la revendication 1.

14. Élément selon la revendication 13 présentant une zone affectée thermiquement sous ladite zone, dans lequel la zone affectée thermiquement s'étend au plus jusqu'à 2 millimètres de profondeur.

15. Élément selon l'une des revendications 13 et 14, dans lequel certains au moins des cordons s'étendent au moins partiellement de manière hélicoïdale autour de ladite zone.

16. Élément selon l'une des revendications 13 à 15, dans lequel chaque cordon présente une épaisseur supérieure à 2,4 millimètres.

17. Élément selon l'une des revendications 13 à 16 comprenant une partie tubulaire formant un corps de tige, dans lequel la couche de rechargement est déposée sur une partie au moins du corps de tige.

18. Élément selon l'une des revendications 13 à 17, dans lequel ladite zone est située sur une portion tubulaire de l'élément d'épaisseur inférieure à 20 millimètres environ, en particulier inférieure à 10 millimètres.

19. Élément selon l'une des revendications 13 à 18, dans lequel la dureté pour une épaisseur radiale locale donnée de la couche de rechargement varie de moins de 10 HRC dans ladite épaisseur radiale locale.

20. Élément selon l'une des revendications 13 à 19, dans lequel la dureté dans l'épaisseur de la couche varie de manière monotone dans l'épaisseur de la couche.

21. Élément selon l'une des revendications 13 à 20 présentant un ou plusieurs évidements ouverts sur sa surface extérieure, dans lequel l'une au moins des couches de rechargement recouvre au moins partiellement les évidements.

## Patentansprüche

1. Verfahren zum Nachfüllen eines Metallwerkstücks mit Zusatzmaterial, wobei das Metallwerkstück ein Bohrstrangelement ist und wobei eine Schweißanlage benutzt wird, die einen Brenner des MIG/MAG-Typs, einen Werkzeugträger, auf dem der Brenner montiert ist, und eine Werkstückauflage umfasst, wobei das Verfahren die folgenden Schritte beinhaltet:
a. Platzieren eines Metallstücks mit einer nachzufüllenden Umfangsfläche mindestens teilweise auf der Werkstückauflage;
b. Bringen des Werkzeugträgers mit dem Brenner und der Werkstückauflage in eine relative Anfangsposition, in der der Brenner auf eine erste Stelle der Umfangsfläche zielt;
c. Bewegen des Werkzeugträgers und der Werkstückauflage relativ zueinander zu einer relativen Endposition, in der der Brenner auf eine zweite Stelle der Umfangsfläche zielt, die von der ersten Stelle axial entfernt ist;
d. Betätigen des Brenners im Kaltschweißmodus während mindestens eines Teils der relativen Bewegung des Werkzeugträgers und der Werkstückauflage, um eine oder mehrere Schweißraupen nebeneinander unter Bildung einer im Wesentlichen kontinuierlichen Schicht auf mindestens einem Teil der Umfangsfläche von der ersten zur zweiten Stelle abzusetzen, wobei der Brenner während mindestens eines Teils der gleichzeitigen Translations- und Rotationsbewegung betätigt wird,
wobei das Betätigen des Brenners im Kaltschweißmodus die folgenden Operationen beinhaltet:
(i) Benutzen eines kurzen Lichtbogens (255) zwischen dem Ende eines Elektrodendrahts (257) und der Umfangsfläche (253) und Vorschieben des Elektrodendrahts (257) in Bezug auf den Brenner (254) in Richtung eines Werkstoffbades;
(ii) Löschen des Lichtbogens, wenn ein Teil des Elektrodendrahts (257) im Schweißbad schmilzt, unter Senkung der Intensität des Stroms im Elektrodendraht (257); und
(iii) Zurückziehen des Elektrodendrahts (257) in Bezug auf den Brenner (254) zum Absetzen eines Tröpfchens (251) des Füllmetalls auf der Umfangsfläche (253), das sich von dem Elektrodendraht (257) löst.

2. Verfahren nach Anspruch 1, bei dem, da die Umfangsfläche eine allgemeine Drehform aufweist, Schritt c. die folgenden Operationen beinhaltet:
c.1. relatives translationales Bewegen des Werkzeugträgers und der Werkstückauflage, so dass der Werkzeugträger in die relative Endposition vorgeschoben wird; und
c.2. relatives rotationales Bewegen des Werkzeugträgers und der Werkstückauflage während mindestens eines Teils ihrer relativen Translationsbewegung, so dass sich der Werkstückträger gleichzeitig um die Umfangsfläche dreht.

3. Verfahren nach Anspruch 2, wobei Schritt d. die folgenden Operationen beinhaltet:
d.1. Betätigen des Brenners im Kaltschweißmodus während mindestens eines Teils der gleichzeitigen Translations- und Rotationsbewegung;
d.2. Stoppen des Brenners in Bezug auf den Werkzeugträger mindestens während seiner Betätigung im Kaltschweißmodus.

4. Verfahren nach Anspruch 3, bei dem Operation c.2. die folgende Suboperation beinhaltet:
c.2.1. Synchronisieren der relativen Rotation des Werkzeugträgers und der Auflage mit ihrer relativen Translation während mindestens eines Teils der Letzteren, so dass der Werkzeugträger mindestens einen Wendelabschnitt in Bezug auf die Umfangsfläche beschreibt; und
Operation d.1. die folgende Suboperation beinhaltet:
d.1.1. Betätigen des Brenners im Kaltschweißmodus auf mindestens einem Teil des Wendelabschnitts.

5. Verfahren nach Anspruch 3, bei dem Operation c.2. die folgende Suboperation beinhaltet:
c.2.1. relatives rotationales Bewegen des Werkzeugträgers und der Werkstückauflage, so dass der Werkzeugträger mehrere Umdrehungen um die Umfangsfläche gleichzeitig mit der relativen Translation des Werkzeugträgers und der Werkstückauflage bewirkt;
Operation d.1. die folgende Suboperation beinhaltet:
d.1.1. Betätigen des Brenners im Kaltschweißmodus während mindestens eines Teils jeder Umdrehung, um jedesmal eine jeweilige Schweißraupe auf der Umfangsfläche abzusetzen; und
Operation d.2. die folgende Suboperation beinhaltet:
d.2.1. Geneigthalten des Brenners in Bezug auf den Werkzeugträger, um bei jeder Umdrehung auf den Fuß einer bei der vorherigen Umdrehung abgesetzten Schweißraupe zu zielen.

6. Verfahren nach Anspruch 4, bei dem die Synchronisation derart ist, dass der Wendelabschnitt zumindest teilweise aneinander grenzende Windungen aufweist.

7. Verfahren nach einem der Ansprüche 1 bis 6, bei dem die abgesetzten Raupen jeweils eine Breite zwischen 1 und 5 mm haben.

8. Verfahren nach einem der Ansprüche 1 bis 7, bei dem der Brenner in Bezug auf den Werkzeugträger mindestens während seiner Betätigung im Kaltschweißmodus stillgehalten wird.

9. Verfahren nach einem der Ansprüche 2 bis 8, bei dem in Operation c.1. der Werkzeugträger und die Werkstückauflage in Bezug zueinander mit einer Geschwindigkeit zwischen 0 und 30 mm pro Minute translationsbewegt werden.

10. Verfahren nach einem der Ansprüche 2 bis 9, bei dem in Operation c.2. der Werkzeugträger und die Werkstückauflage relativ zueinander mit einer Geschwindigkeit zwischen 0 und 10 Umdrehungen pro Minute gedreht werden.

11. Verfahren nach einem der Ansprüche 1 bis 10, das ferner den folgenden Schritt beinhaltet:
e. Halten des Werkstücks auf Umgebungstemperatur mindestens bis zum Betätigen des Brenners.

12. Verfahren nach einem der Ansprüche 1 bis 11, bei dem die ein oder mehreren abgesetzten Raupen auf einem Teil ihrer Breite zwischen 10 und 30 % überlappen.

13. Bohrstrangelement des Typs mit mindestens einer Nachfüllschicht, **dadurch gekennzeichnet, dass** die Nachfüllschicht eine oder mehrere Füllmetallraupen jeweils mit einer Breite zwischen 1 und 5 Millimetern aufweist, nebeneinander abgesetzt zum Bilden einer im Wesentlichen kontinuierlichen Schicht auf einer Zone des Elements, während die Härte in der Dicke der Schicht um weniger als 10 HRC in der Zone variiert, und dadurch, dass das Element mit dem Verfahren nach Anspruch 1 erhalten wird.

14. Element nach Anspruch 13, das eine wärmebeeinflusste Zone unter dieser Zone aufweist, wobei sich die wärmebeeinflusste Zone bis höchstens 2 mm Tiefe erstreckt.

15. Element nach einem der Ansprüche 13 und 14, bei dem sich mindestens bestimmte der Raupen mindestens teilweise wendelartig um die Zone erstrecken.

16. Element nach einem der Ansprüche 13 bis 15, bei dem jede Raupe eine Dicke von mehr als 2,4 mm aufweist.

17. Element nach einem der Ansprüche 13 bis 16, das einen tubulären Teil aufweist, der einen Stangenkörper bildet, bei dem die Nachfüllschicht auf mindestens einen Teil des Stangenkörpers abgesetzt wird.

18. Element nach einem der Ansprüche 13 bis 17, wobei sich die Zone in einem röhrenförmigen Teil des Elements mit einer Dicke von weniger als etwa 20 mm, insbesondere weniger als 10 mm befindet.

19. Element nach einem der Ansprüche 13 bis 18, bei dem die Härte für eine gegebene radiale lokale Dicke der Nachfüllschicht um weniger als 10 HRC in der radialen lokalen Härte variiert.

20. Element nach einem der Ansprüche 13 bis 19, wobei die Härte in der Dicke der Schicht monoton in der Dicke der Schicht variiert.

21. Element nach einem der Ansprüche 13 bis 20, das eine oder mehrere offene Aussparungen auf der Außenfläche aufweist, wobei mindestens eine der Nachfüllschichten die Aussparungen mindestens teilweise bedeckt.

## Claims

1. A method for refilling a metal part with filler metal, wherein the metal part is a drill string element, and wherein a welding installation is used that comprises a MIG/MAG type torch, a tool holder, on which the torch is mounted, and a work support, the method comprising the following steps:
a. placing a metal part comprising a peripheral surface to be refilled at least partially onto the work support;
b. bringing the tool holder with the torch and the work support to an initial relative position where the torch targets a first site on the peripheral surface;
c. moving the tool holder and the work support one relative to the other to a final relative position where the torch targets a second site on the peripheral surface, axially spaced apart from the first location;
d. activating the torch in cold welding mode during at least part of the relative movement of the tool holder and of the work support in order to adjacently deposit one or more metal filler beads by forming a substantially continuous layer over at least part of the peripheral surface proceeding from the first to the second site, with the torch being activated in cold welding mode during at least part of the simultaneous translation and rotation movement,
wherein activating the torch in cold welding mode comprises the following steps:
(i) using a short electric arc (255) between the end of an electrode wire (257) and the peripheral surface (253) and advancing the electrode wire (257) relative to the torch (254) towards a bath of material;
(ii) removing the electric arc, when part of the electrode wire (257) melts in the welding bath, by reducing the intensity of the current in the electrode wire (257); and
(iii) pulling back the electrode wire (257) relative to the torch (254) in order to deposit a droplet (251) of the filler metal onto the peripheral surface (253), which detaches itself from the electrode wire (257).

2. The method as claimed in claim 1, wherein, with the peripheral surface having a general circular shape, step c. comprises the following operations:
c. 1. moving the tool holder and the work support by relative translation so that the tool holder advances towards the final relative position; and
c.2. moving the tool holder and the work support by relative rotation during at least part of their relative translation movement so that the tool holder rotates at the same time around the peripheral surface.

3. The method as claimed in claim 2, wherein step d. comprises the following operations:
d.1. activating the torch in cold welding mode during at least part of the simultaneous translation and rotation movement;
d.2. immobilising the torch relative to the tool holder at least during its activation in cold welding mode.

4. The method as claimed in claim 3, wherein operation c.2. comprises the following sub-operation:
c.2.1. synchronising the relative rotation of the tool holder and of the support with their relative translation movement during at least part of said movement so that the tool holder describes at least one portion of a helix relative to the peripheral surface; and
operation d.1. comprises the following sub-operation:
d.1.1. activating the torch in cold welding mode over at least part of the helix portion.

5. The method as claimed in claim 3, wherein operation c.2. comprises the following sub-operation:
c.2.1. moving the tool holder and the work support by relative rotation so that the tool holder completes several rotations around the peripheral surface at the same time as the relative translation movement of the tool holder and of the work support;
operation d.1. comprises the following sub-operation:
d.1.1. activating the torch in cold welding mode during at least part of each rotation so as to deposit a respective welding bead onto the peripheral surface each time; and
operation d.2. comprises the following sub-operation:
d.2.1. keeping the torch inclined relative to the tool holder so that for each rotation it targets the base of a welding bead deposited during the preceding rotation.

6. The method as claimed in claim 4, wherein the synchronisation is such that the helix portion has contiguous turns, at least partly.

7. The method as claimed in any one of claims 1 to 6, wherein the width of each deposited bead is between 1 and 5 millimetres.

8. The method as claimed in any one of claims 1 to 7, wherein the torch is immobilised relative to the tool holder, at least during its activation in cold welding mode.

9. The method as claimed in any one of claims 2 to 8, wherein, in operation c.1. the tool holder and the work support are translationally moved one relative to the other at a speed ranging between 0 and 30 millimetres per minute.

10. The method as claimed in any one of claims 2 to 9, wherein, in operation c.2. the tool holder and the work support are rotated one relative to the other at a speed ranging between 0 and 10 revolutions per minute.

11. The method as claimed in any one of claims 1 to 10, further comprising the following step:
e. keeping the part at ambient temperature at least until the torch is activated.

12. The method as claimed in any one of claims 1 to 11, wherein the one or more deposited beads overlap over part of their width by between 10% and 30%.

13. A drill string element of the type comprising at least one refilling layer, **characterised in that** the refilling layer comprises one or more metal filler beads each being between 1 and 5 millimetres wide and being deposited adjacently in order to form a substantially continuous layer over a zone of the element, whereas the hardness in the thickness of the layer varies by less than 10 HRC over said zone, and **in that** the element is obtained using the method as claimed in claim 1.

14. The element as claimed in claim 13, having a thermally affected zone under said zone, wherein the thermally affected zone at most extends by a depth of up to 2 millimetres.

15. The element as claimed in any one of claims 13 and 14, wherein at least some of the beads at least partially helically extend around said zone.

16. The element as claimed in any one of claims 13 to 15, wherein the thickness of each bead is greater than 2.4 millimetres.

17. The element as claimed in any one of claims 13 to 16 comprising a tubular part forming a rod body, wherein the refilling layer is deposited onto at least part of the rod body.

18. The element as claimed in any one of claims 13 to 17, wherein said zone is located on a tubular portion of the element that is less than approximately 20 millimetres thick, in particular less than 10 millimetres thick.

19. The element as claimed in any one of claims 13 to 18, wherein the hardness for a given local radial thickness of the refilling layer varies by less than 10 HRC in said local radial thickness.

20. The element as claimed in any one of claims 13 to 19, wherein the hardness in the thickness of the layer monotonously varies in the thickness of the layer.

21. The element as claimed in any one of claims 13 to 20, having one or more open recesses on its outer surface, wherein at least one of the refilling layers at least partially covers the recesses.
